# EUROPÄISCHE PATENTSCHRIFT

(11) **EP 1 365 577 B1**
(45) Veröffentlichungstag und Bekanntmachung des Hinweises auf die Patenterteilung: **29.03.2006**
(21) Anmeldenummer: 03009022.9
(22) Anmeldetag: 17.04.2003
(51) Int. Cl.: H04N 1/41, G06K 7/14

(54) **Verfahren zum Betrieb eines optoelektronischen Sensors**
Method for controlling an opto-electronic sensor
Procédé de fonctionnement d'un capteur opto-électronique

(30) Priorität: 18.05.2002 DE 10222281
(43) Veröffentlichungstag der Anmeldung: 26.11.2003
(73) Patentinhaber: SICK AG, 79183 Waldkirch (DE)
(72) Erfinder: Reichenbach, Jürgen, 79312 Emmendigen (DE); Hauser, Peter, 79108 Freiburg (DE); Hafner, Carl Joseph, 79312 Emmendingen (DE); Fillhardt, Christiane, 77746 Schutterwald (DE)
(74) Vertreter: Ludewigt, Christoph

(56) Entgegenhaltungen:
- EP-A- 0 535 966
- US-A- 4 590 606
- US-A- 4 651 221

## Beschreibung

Die Erfindung betrifft einen Codeleser gemäß dem Oberbegriff des Anspruchs 1

Mit optoelektronischen Sensoren wie Codelesern werden Codes, beispielsweise eindimensionale Barcodes oder zweidimensionale Matrixcodes, gelesen, wobei die Codeleser nach verschiedenen Prinzipien arbeiten. Bei Codelesern, die nach dem Scannerprinzip arbeiten, wird der Code gelesen, indem ein Lichtstrahl als sogenannter "Fahrstrahl" über das abzutastende Objekt, beispielsweise ein Etikett mit einem Barcode, bewegt wird. Das vom Objekt reflektierte und/oder remittierte Licht wird von einem Lichtempfänger empfangen und in elektronische Signale umgesetzt. Aus in den elektrischen Signalen enthaltenen Amplitudeninformationen wird die Barcodeinformation abgeleitet.

Zweidimensionale Codes werden zumeist mit Codelesern, die nach dem Kameraprinzip arbeiten, gelesen. Dabei wird das abzutastende Objekt mit einem im Querschnitt linienförmigen Lichtfächer oder einer flächigen Beleuchtung beleuchtet und das von dem beleuchteten Objekt reflektierte und/oder remittierte Licht auf ein ein- oder zweidimensionales Empfängerarray z. B. einen CCD- oder CMOS-Zeilen- oder Matrixsensor, abgebildet. Durch Auswertung der Unterschiede der Empfangsamplituden verschiedener Empfangspixel kann der Code und daraus die Codeinformation erhalten werden.

Aus der US 5,703,349 ist ein mobiler Codeleser bekannt, bei dem die vom Codeleser erfassten Bilder vor der Weiterverarbeitung komprimierbar sind, um sie beispielsweise per Funk schneller übermitteln zu können.

Eine Komprimierung von Bildern ist auch für verschiedene andere Anwendungen wünschenswert. Bei diesen Anwendungen kann es sich beispielsweise um die Speicherung bestimmter Bilder handeln, z.B Referenzbilder oder fehlerhafte Bilder, die einer späteren Fehlerdiagnose zugeführt werden sollen oder Testbilder zum Einlernen bestimmter Parameter in den Sensor oder dergleichen mehr.

Aus der US 4,651,221 ist eine Telefaxgerät bekannt, bei dem das zu übertragene Dokument zeilenweise gescannt wird und die Scandaten als Binärdaten in einem Speicher zeilenweise vorliegen und zur Übertragung komprimiert werden.

Aus der EP 0 535 966 A2 ist ein Dokumentenscanner bekannt, bei dem die Dokumente ebenfalls zeilenweise gescannt werden und als Binärdaten komprimiert werden.

Ausgehend von diesem Stand der Technik ist es Aufgabe der Erfindung, einen verbesserten Codeleser bereitzustellen, bei dem insbesondere eine schnellere und speicherplatzeffizientere Verarbeitung möglich ist.

Diese Aufgabe wird durch einen Codeleser mit den Merkmalen des Anspruchs 1 gelöst.

Ein erfindungsgemäßer Codeleser ist gekennzeichnet durch eine wenigstens eine Empfangszeile aufweisende Lichtempfangseinrichtung, eine Auswerteeinrichtung und eine Bildkompressionseinrichtung, wobei Mittel zum zeilenweisen Auslesen der Lichtempfangseinrichtung vorgesehen sind und die Bildkompressionseinrichtung Mittel aufweist, mit der die ausgelesenen Zeilen komprimierbar sind und mit Mitteln zum Zusammenfügen der komprimierten Zeilen zu einem vollständigen, komprimierten Bild und wobei die Lichtempfangseinrichtung wieder empfangsbereit ist, während die Bildkompressionseinrichtung gleichzeitig die zuvor ausgelesene Zeile oder Zeilen komprimiert und wobei die Bildkompressionseinrichtung zur Komprimierung von Grauwertbildern ausgebildet ist.

In Weiterbildung sind Speichermittel vorgesehen zum Speichern der komprimierten Bilder, wobei vorteilhafterweise der Speicher als "first in first out" (FIFO) Speicher aufgebaut ist und das komprimierte Bild zeilenweise abspeicherbar ist. So wird bei vollem Speicher beim Abspeichern des aktuell abzuspeichernden, komprimierten Bildes, jeweils das älteste der abgespeicherten Bilder überschrieben. Dadurch sind immer die letzten der zu speichernden Bilder gespeichert, so dass für eine weitere Auswertung immer die aktuellsten Bildern zur Verfügung stehen.

Die Zeit, die zum Empfang und zur Komprimierung benötigt wird, kann dadurch erheblich verkürzt werden, da die Komprimierung im wesentlichen gleichzeitig mit dem Bildempfang abläuft. Damit kann im Falle eines Codelesers die Leserate erhöht werden und/oder es steht mehr Zeit zur Auswertung der mit dem Codeleser gesehenen bzw. gelesene Bilder bzw. Daten zur Verfügung.

In Ausgestaltung der Erfindung kann zum im wesentlichen gleichzeitigen Empfang und Komprimierung der Bilder jede vollständig empfangene Zeile unmittelbar nach Empfang komprimiert werden oder es werden jeweils nach einer vorbestimmten Anzahl vollständig empfangener Zeilen diese komprimiert. Alternativ ist es auch denkbar, dass bereits nach Empfang eines Teiles einer Zeile, also nach Empfang einer vorherbestimmte Anzahl an Pixel im Bild, komprimiert wird.

Je nach Anwendungsfall kann es vorteilhaft sein, dass nach jeder Komprimierung einer Zeile bzw. einer Anzahl von Zeilen, das Kompressionsergebnis weiterverarbeitet, beispielsweise abgespeichert wird oder über eine bandbegrenzte Schnittstelle quasi in Echtzeit übertragen wird. Alternativ kann anstelle einer zeilenweise Abarbeitung auch das vollständige, komprimierte Bild weiterverarbeitet, beispielsweise über die bandbegrenzte Schnittstelle übertragen werden.

Durch den dabei vorgesehenen Einsatz der Bildkompression, die an sich aus der Bildverarbeitung bekannt ist, ergeben sich die wesentlichen Vorteile, dass die komprimierten Bilder nur wenig Speicherplatz benötigen und so mehrere Bilder speicherplatzsparend abspeicherbar sind. Diese Bilder können in einer Anwendung sogenannte NOREAD-Bilder sein. Das sind Bilder eines zu lesenden Codes, beispielsweise eines Barcodes oder eines zweidimensionalen Codes, die zu Fehllesungen des Codes führten. Dabei kann es sich auch um beliebige andere zu erkennende optische Kennzeichen handeln, wie z.B. auch OCR-Druck oder Handschrift. Das Vorhandensein einer Serie von NOREAD-Bildern, beispielsweise 20 bis 30, wiederum erlaubt eine effektive Fehlerdiagnose, die letztendlich, wenn die Fehler erkannt wurden und korrigierbar sind, die Erkennungsrate des Sensors verbessert. So kann beispielsweise der Algorithmus zum Lesen der Codes an schwierig zu lesende Codes angepasst werden. In einer anderen Anwendung eröffnet ein Einsatz der Bildkompression die Möglichkeit, Referenz-Codes zu speichern, die mit zu lesenden Testcodes verglichen werden können, wodurch z.B. Filter optimiert werden können.

Die komprimierten Bilder können dabei temporär oder dauerhaft in dem Sensor abgespeichert sein, um sie beispielsweise über die bandbegrenzte Schnittstelle schnell einer späteren Analyse zuführen zu können. Diese Analyse kann beispielsweise durch einen Vorort-Service oder auch einen Fern-Service über das Internet, realisiert sein. Komprimierte Bilddaten können dabei schneller und besser über eine bandbegrenzte Schnittstelle zu einer externen Verarbeitungseinheit zu übertragen. Dies ist insbesondere bei Ferndiagnosen über Netzwerke vorteilhaft.

Weiter kann die Erfindung vorteilhaft auch in anderen optoelektronischen Sensoren eingesetzt werden, beispielsweise in einem Laserscanner zur Objektvermessung und/oder Objekterkennung, wie er beispielsweise von der Anmelderin unter der Bezeichnung LMS vertrieben wird. Derartige Scanner erfassen Abstandsbilder und können beispielsweise eingesetzt werden, um z.B. an Mautstationen Fahrzeuge zu klassifizieren. Auch in dieser Anwendung kann die Möglichkeit der Abspeicherung von fehlgelesenen, komprimierten Bildern die Fehlerdiagnose vereinfachen oder von Referenzbildern die Auswertung vereinfachen.

Die zu verarbeitenden Bilder können Farbbilder, Grauwertbilder oder Binärbilder (schwarz/weiß) bzw. beim genannten LMS auch Abstandsbilder sein, bei welchem die Abstände im Bild als Grauwert oder Farbwert codiert werden können. Sie können über verschiedenste Schnittstellen, z.B. serielle, asynchrone etc., des Sensors und verschiedene Protokolle, insbesondere Ethernet, TCP-IP, ftp, etc., übertragen werden.

Vorteilhafterweise wird als Kompressionsverfahren ein unter der Bezeichnung JPEG bekanntes Kompressionsverfahren eingesetzt.

In Weiterbildung der Erfindung kann der Kompressionsgrad eingestellt werden kann. Auf diese Weise kann der Kompressionsgrad an die Anforderungen angepasst werden, so dass je nach Anwendung ein möglichst hoher noch zulässiger Kompressionsgrad gewählt werden kann, um letztendlich Speicherplatz zu sparen oder eine Datenübertragung zu beschleunigen.

Dabei ist es besonders vorteilhaft, wenn der Kompressionsgrad in Abhängigkeit bestimmter Parameter, im Falle eines Codelesers beispielsweise der Decodierbarkeit der komprimierten Bilder oder aufgrund des zu Verfügung stehenden Speichers oder Bandbreite des Übertragungskanals selbsttätig von dem Codeleser bestimmt wird.

Es hat sich herausgestellt, dass mit einem Kompressionsgrad von etwa 20 bis 50 gute Ergebnisse erzielbar sind, d.h. es bleiben nach Komprimierung und ggf. Dekomprimierung ausreichend Informationen für eine Fehlerdiagnose erhalten. Ein Kompressionsgrad von 50 reicht oft noch für die visuelle Begutachtung der Bilder aus, sofern ein offensichtlicher Fehler im Druck, ein zerstörtes Codelabel oder sogar das Nichtvorhandensein des Labels für das Noread verantwortlich ist. Sind Details im Codedruck oder in der Umgebung für das Noread verantwortlich, so muss die Kompression geringer gewählt werden, um eine sinnvolle Diagnose zu ermöglichen.

Im Folgenden wird die Erfindung an Hand eines Ausführungsbeispiels unter Bezugnahme auf die Zeichnung im Einzelnen erläutert. In der Zeichnung zeigen:
- Fig. 1: eine schematische Darstellung eines erfindungsgemäßen Codelesers;
- Fig. 2: ein Flussdiagramm des erfindungsgemäßen Verfahrensablaufs;
- Fig. 3: ein Diagramm zur Verdeutlichung zeitlicher Abläufe.

Die Erfindung wird im Folgenden anhand eines Codelesers beschrieben und kann aber auch, wie eingangs erläutert, in anderen optoelektronischen Sensoren verwirklicht sein.

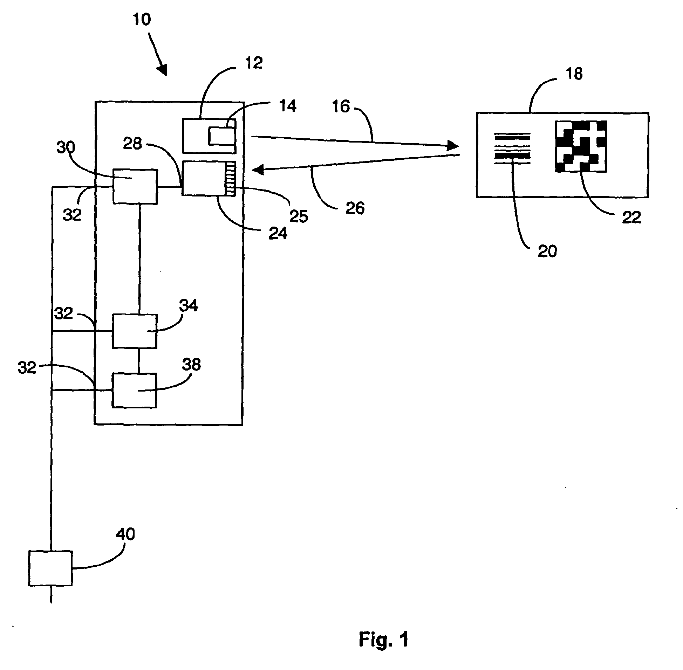

Ein in Fig. 1 dargestellter optoelektronische Sensor, Codeleser 10, weist einen Lichtsender 12 mit einer Lichtquelle 14 zum Aussenden eines Lichtstrahls 16 auf. Mit dem Lichtstrahl 16 wird ein Objekt 18 beleuchtet, das einen Code 20 bzw. 22 trägt. Bei dem Code kann es sich um einen eindimensionalen Barcode, wie er bei dem Bezugszeichen 20 schematisch dargestellt ist oder um einen zweidimensionalen Code, wie er bei dem Bezugszeichen 22 schematisch dargestellt ist, handeln. Andere Codes, beispielsweise Farbcodes sind denkbar. Um mit dem Lichtstrahl 16 den Code 20 oder 22 vollständig zu beleuchten, kann der Codeleser 10 eine nicht näher dargestellte Lichtablenkvorrichtung aufweisen, so dass der Lichtstrahl 16 über den Code 20 oder 22 gescannt werden kann.

Der Lichtstrahl 16 kann linienförmig auf das Objekt 18 fokussiert sein, so dass im Falle des eindimensionalen Codes 20 dieser über seine ganze Länge beleuchtet werden kann und im Falle des zweidimensionalen Codes 22, dieser mit dem linienförmigen Lichtstrahl 16 vollständig gescannt werden kann.

Der Codeleser 10 weist weiter einen Lichtempfänger 24 auf, mit dem das vom Objekt 18 reflektierte und/oder remittierte Licht 26 empfangen wird, wozu der Lichtempfänger 24 in der Regel eine geeignete Optik enthält. In dem Lichtempfänger 24 wird das empfangene Licht in elektronische Signale umgewandelt und steht an einem Ausgang 28 zur weiteren Verarbeitung zur Verfügung.

Der Lichtempfänger 24 weist vorzugsweise ein nicht näher dargestelltes eindimensionales, also einzeiliges Empfängerarray 25 auf, um den beleuchteten Bereich vollständig auf den Empfänger 24 abbilden zu können. Das Empfängerarray 25 kann ein Zeilensensor oder auch ein zweidimensionaler Matrixsensor sein, die in CCD- oder CMOS-Bauweise realisiert sein können. Im Fall des Matrixsensors werden immer mehrere Zeilen gleichzeitig empfangen.

Der Codeleser 10 könnte auch als Kamera aufgebaut sein. In diesem Fall könnte der Codeleser lediglich einen Lichtempfänger 24 und keinen Lichtsender 12 aufweisen. Die Beleuchtung der Codes kann durch eine externe Beleuchtung realisiert ein.

Die dem empfangenen Licht entsprechenden elektronischen Signale werden einer Auswerteeinheit 30 zugeführt, in der eine Dekodierung des Codes 20 bzw. 22 vorgenommen wird, also die Codes gelesen werden. Die in dem Code 20 bzw. 22 enthaltene Information kann über eine Schnittstelle 32 ausgegeben oder anderweitig verwertet werden.

Erfindungsgemäß können die empfangenen Zeilen an eine Bildkompressionseinrichtung 34 weitergeleitet werden, in der die Zeilen mit Hilfe eines Kompressionsalgorithmus komprimiert werden. Die Komprimierung geschieht dabei entweder nach jeder Zeile oder vorteilhafterweise nach Empfang einer bestimmten Anzahl von Zeilen, die dann in einem gemeinsamen Schritt komprimiert werden. Die unter der Bezeichnung JPEG bekannten Algorithmen haben sich in bisherigen Versuchen als vorteilhaft gezeigt. Dabei werden bevorzugt immer acht Zeilen komprimiert.

Das komprimierte Bild, also die Summer aller Zeilen eines Bildes, kann entweder ausgegeben werden, beispielsweise über die Schnittstelle 32 oder aber in einem Speicher 38 gespeichert werden und so ggf. zu einem späteren Zeitpunkt über die Schnittstelle 32 ausgelesen werden.

Der Speicher 38 kann ein sensorinterner Speicher sein, in dem die Daten beispielsweise temporärer (RAM) oder aber dauerhaft (Flash-Prom) speicherbar sind. Alternativ kann der Speicher sensorextern, beispielsweise als Diskette, vorgesehen sein. In einer weiteren Alternative kann der Speicher 38 als "first in first out" (FIFO) Speicher aufgebaut sein, so dass bei vollem Speicher zum Speichern des aktuellen, komprimierten Bildes, jeweils das älteste der bereits abgespeicherten Bilder überschrieben wird. Auf diese Weise lassen sich immer die zuletzt gesehenen Bilder speichern.

Die Schnittstelle kann bandbegrenzt sein und beliebig, z.B. seriell, parallel, asynchron, ausgebildet sein. Es können verschiedene Protokolle, z.B. Ethemet, TCP/IP o. dgl., eingesetzt werden.

Die komprimierten Bilder, die weiter ausgewertet oder anderweitig genutzt werden sollen, können wie erwähnt über die Schnittstelle 32 ausgelesen und in eine weitere Auswerteeinheit 40, beispielsweise eine Fehlerdiagnoseeinrichtung, eingelesen werden. Die weitere Auswerteeinheit 40 kann sensorintern oder sensorextern vorgesehen sein. Insbesondere ist eine Ferndiagnose, beispielsweise über das Intemet, denkbar.

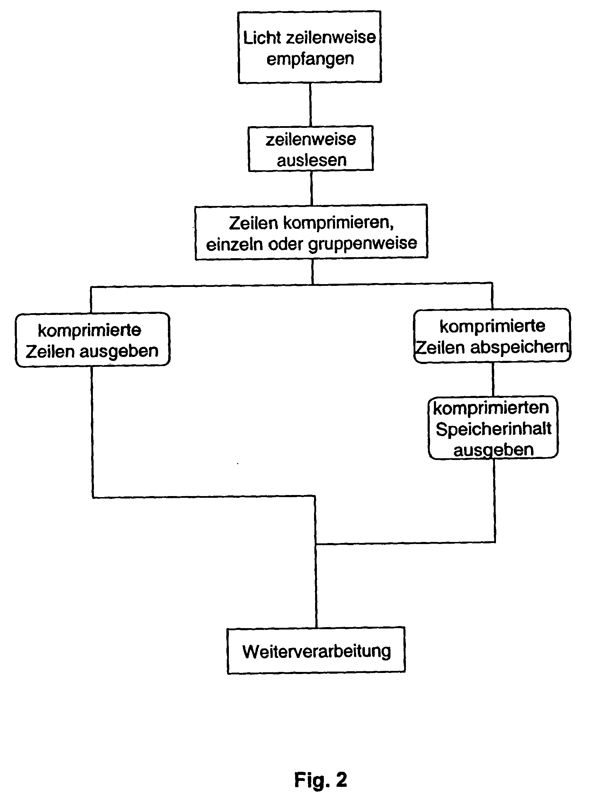

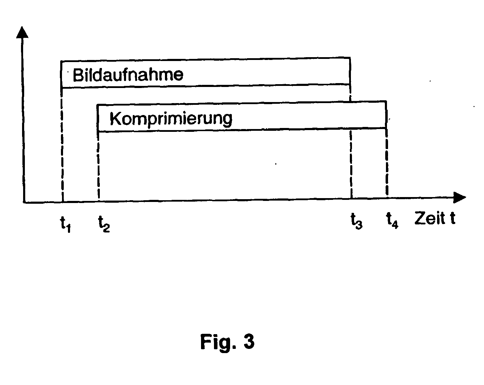

Die Erfindung sei nochmals kurz anhand des in Fig. 2 und 3 dargestellten Verfahrensablaufes erläutert.

Nachdem das Licht zeilenweise empfangen wurde, werden die ersten empfangenen Zeilen von der Auswerteeinheit ausgelesen und - falls das Bild komprimiert werden soll - der Bildkompressionseinrichtung 34 zugeführt. In der Bildkompressionseinrichtung 34 wird entweder jede einzelne Zeile oder immer eine Gruppe von Zeilen komprimiert. Die komprimierten Zeilen können entweder ausgegeben oder abgespeichert werden für eine weitere Verarbeitung.

Während diese Zeilen - entweder einzeln oder gruppenweise - komprimiert werden, werden zeitgleich vom Lichtempfänger weitere Zeilen des Bildes empfangen und an die Auswerteeinheit weitergegeben. Auf diese Weise wird ein Bild im wesentlichen gleichzeitig empfangen und komprimiert, wie dies in Fig. 3 dargestellt ist. Zum Zeitpunkt t₁ beginnt der zeilenweise Bildempfang. Nach Empfang und Weiterleitung einer bestimmten Anzahl von Zeilen an die Bildkompressionseinrichtung beginnt zum Zeitpunkt t₂ die Komprimierung der ersten Zeilen. Der Empfang der letzten Zeile des Bildes ist zum Zeitpunkt t₃ abgeschlossen und die letzte Zeile dann zum Zeitpunkt t₄ komprimiert. Es ist zu ersehen, dass die Zeitdifferenz t₂-t₁ in etwa gleich der Differenz t₄-t₃ sein muss.

Aus der Fig. 3 ist ein Vorteil der Erfindung zu erkennen, nämlich dass durch die zeitliche Überlappung von Bildaufnahme und Komprimierung ein erheblicher Zeitgewinn erreicht werden kann, der abhängig von der Größe der aufzunehmenden Bilder, also abhängig von der Überlappung, bis nahezu einem Faktor zwei betragen kann.

## Patentansprüche

1. Codeleser, mit einer wenigstens eine Empfangszeile aufweisenden Lichtempfangseinrichtung (24), einer Auswerteeinrichtung (30) und einer Bildkompressionseinrichtung (34), **dadurch gekennzeichnet, dass** Mittel zum zeilenweisen Auslesen der Lichtempfangseinrichtung (24) vorgesehen sind und dass die Bildkompressionseinrichtung (34) Mittel aufweist, mit der die ausgelesenen Zeilen komprimierbar sind und mit Mitteln zum Zusammenfügen der komprimierten Zeilen zu einem vollständigen, komprimierten Bild und dass die Lichtempfangseinrichtung (24) wieder empfangsbereit ist, während die Bildkompressionseinrichtung (34) die zuvor ausgelesene Zeile oder Zeilen komprimiert und wobei die Bildkompressionseinrichtung zur Komprimierung von Grauwertbildern ausgebildet ist.

2. Codeleser nach Anspruch 1, **dadurch gekennzeichnet, dass** Speichermittel (38) vorgesehen sind zum Speichern der komprimierten Bilder.

3. Codeleser nach einem der vorhergehenden Ansprüche, **dadurch gekennzeichnet, dass** der Speicher als "first in first out" (FIFO) Speicher aufgebaut ist und das komprimierte Bild zeilenweise abspeicherbar ist.

4. Codeleser nach einem der vorhergehenden Ansprüche, **dadurch gekennzeichnet, dass** mit der Bildkompressionseinrichtung jede vollständig empfangene Zeile unmittelbar nach Empfang komprimierbar ist.

5. Codeleser einem der vorhergehenden Ansprüche 1 bis 3, **dadurch gekennzeichnet, dass** mit der Bildkompressionseinrichtung jeweils nach einer vorbestimmten Anzahl vollständig empfangener Zeilen diese komprimierbar sind.

6. Codeleser einem der vorhergehenden Ansprüche 1 bis 3, **dadurch gekennzeichnet, dass** mit der Bildkompressionseinrichtung jede teilweise empfangene Zeile, also eine vorherbestimmte Anzahl an Pixel im Bild, unmittelbar nach Empfang komprimierbar ist.

7. Codeleser nach einem der vorhergehenden Ansprüche, **dadurch gekennzeichnet, dass** nach jeder Komprimierung einer Zeile bzw. einer Anzahl von Zeilen, das Kompressionsergebnis über eine bandbegrenzte Schnittstelle (32) übertragbar ist.

8. Codeleser nach einem der vorhergehenden Ansprüche 1 bis 6, **dadurch gekennzeichnet, dass** nach Empfang und Komprimierung der letzten Zeile bzw. letzten Anzahl von Zeilen eines Bildes, das vollständige, komprimierte Bild über eine bandbegrenzte Schnittstelle (32) übertragbar ist.

9. Codeleser nach einem der vorhergehenden Ansprüche, **dadurch gekennzeichnet, dass** das komprimierte Bild im Codeleser selbst abspeicherbar ist.

10. Codeleser nach Anspruch 9, **dadurch gekennzeichnet, dass** die komprimierten Bilder über Fernwartung abrufbar sind.

11. Codeleser nach einem der vorhergehenden Ansprüche, **dadurch gekennzeichnet, dass** in der Bildkompressionseinrichtung als Kompressionsverfahren ein unter der Bezeichnung JPEG bekanntes Kompressionsverfahren eingesetzt ist.

12. Codeleser nach einem der vorhergehenden Ansprüche, **dadurch gekennzeichnet, dass** der Kompressionsgrad einstellbar ist.

13. Codeleser nach einem der vorhergehenden Ansprüche, **dadurch gekennzeichnet, dass** der Kompressionsgrad in Abhängigkeit bestimmter Parameter selbsttätig von dem Codeleser bestimmbar ist.

## Claims

1. Code reader, having a light receiving device (24) which has at least one receiving line, having an evaluation device (30) and having an image compression device (34), **characterized in that** means are provided for reading the light receiving device (24) line-by-line, and **in that** the image compression device (34) has means which can be moved to compress the lines that have been read, and having means for combination of the compressed lines to form a complete, compressed image, and **in that** the light receiving device (24) is ready to receive again while the image compression device (34) is compressing the previously read line or lines, and with the imagine compression device being designed to compress grey scale images.

2. Code reader according to Claim 1, **characterized in that** memory means (38) are provided for storage of the compressed images.

3. Code reader according to one of the preceding claims, **characterized in that** the memory is in the form of a "first in first out" (FIFO) memory, and the compressed image can be stored line-by-line.

4. Code reader according to one of the preceding claims, **characterized in that** the image compression device can be used to compress each completely received line immediately after reception.

5. Code reader according to one of the preceding Claims 1 to 3, **characterized in that** the image compression device can be used to compress lines in each case after a predetermined number of completely received lines.

6. Code reader according to one of the preceding Claims 1 to 3, **characterized in that** the image compression device can be used to compress each partially received line, that is to say a predetermined number of pixels in the image, immediately after reception.

7. Code reader according to one of the preceding claims, **characterized in that**, after each compression of a line or of a number of lines, the compression result can be transmitted via a band-limited interface (32) .

8. Code reader according to one of the preceding Claims 1 to 6, **characterized in that**, after reception and compression of the last line or the last number of lines of an image, the complete, compressed image can be transmitted via a band-limited interface (32).

9. Code reader according to one of the preceding claims, **characterized in that** the compressed image can be stored in the code reader itself.

10. Code reader according to Claim 9, **characterized in that** the compressed images can be called up via remote maintenance.

11. Code reader according to one of the preceding claims, **characterized in that** a compression method which is known by the title JPEG is used as the compression method in the image compression device.

12. Code reader according to one of the preceding claims, **characterized in that** the compression level is variable.

13. Code reader according to one of the preceding claims, **characterized in that** the compression level can be determined automatically by the code reader as a function of specific parameters.

## Revendications

1. Lecteur de code, avec un dispositif récepteur de lumière (24) comportant au moins une ligne de réception, un dispositif d'évaluation (30) et un dispositif de compression d'images (34), **caractérisé en ce que** des moyens sont prévus pour la lecture par lignes du dispositif récepteur de lumière (24), **en ce que** le dispositif de compression d'images (34) comporte des moyens avec lesquels les lignes lues peuvent être compressées, et des moyens pour compiler les lignes compressées en une image complète compressée, et **en ce que** le dispositif récepteur de lumière (24) est à nouveau prêt à la réception pendant que le dispositif de compression d'images (34) compresse la ligne ou les lignes lues auparavant, et le dispositif de compression d'images étant agencé pour la compression d'images de valeurs de gris.

2. Lecteur de code selon la revendication 1,
**caractérisé en ce que** des moyens de mémorisation (38) sont prévus pour mémoriser les images compressées.

3. Lecteur de code selon l'une des revendications précédentes, **caractérisé en ce que** la mémoire est agencée sous la forme d'une mémoire "first in first out" (FIFO), et **en ce que** l'image compressée peut être mémorisée par lignes.

4. Lecteur de code selon l'une des revendications précédentes, **caractérisé en ce que**, avec le dispositif de compression d'images, chaque ligne entièrement reçue peut être compressée directement après la réception.

5. Lecteur de code selon l'une des revendications précédentes 1 à 3, **caractérisé en ce que**, avec le dispositif de compression d'images, les lignes reçues peuvent être respectivement compressées après un nombre prédéterminé de lignes entièrement reçues.

6. Lecteur de code selon l'une des revendications précédentes 1 à 3, **caractérisé en ce que**, avec le dispositif de compression d'images, chaque ligne reçue partiellement, donc un nombre prédéterminé de pixels dans l'image, peut être compressée directement après la réception.

7. Lecteur de code selon l'une des revendications précédentes, **caractérisé en ce que**, après chaque compression d'une ligne ou d'un nombre de lignes, le résultat de la compression peut être transmis par l'intermédiaire d'une interface (32) à bande limitée.

8. Lecteur de code selon l'une des revendications précédentes 1 à 6, **caractérisé en ce que**, après la réception et la compression de la dernière ligne ou du dernier nombre de lignes d'une image, l'image complète compressée peut être transmise par l'intermédiaire d'une interface (32) à bande limitée.

9. Lecteur de code selon l'une des revendications précédentes, **caractérisé en ce que** l'image compressée peut être mémorisée dans le lecteur de code lui-même.

10. Lecteur de code selon la revendication 9,
**caractérisé en ce que** les images compressées peuvent être appelées par télémaintenance.

11. Lecteur de code selon l'une des revendications précédentes, **caractérisé en ce qu'**un procédé de compression connu sous la désignation JPEG est utilisé en tant que procédé de compression dans le dispositif de compression d'images.

12. Lecteur de code selon l'une des revendications précédentes, **caractérisé en ce que** le degré de compression est réglable.

13. Lecteur de code selon l'une des revendications précédentes, **caractérisé en ce que** le degré de compression peut être défini automatiquement par le lecteur de code en fonction de certains paramètres.
